# EUROPEAN PATENT SPECIFICATION

(11) **EP 3 625 189 B1**
(45) Date of publication and mention of the grant of the patent: **12.02.2025**
(21) Application number: 18724855.4
(22) Date of filing: 15.05.2018
(51) Int. Cl.: C04B 28/02, C04B 40/00, C09K 8/467

(54) **DEFOAMER EMULSION**
ENTSCHÄUMEREMULSION
ÉMULSION ANTIMOUSSE

(30) Priority: 19.05.2017 WO PCT/CN2017/085139
(43) Date of publication of application: 25.03.2020
(73) Proprietor: BASF SE, 67056 Ludwigshafen am Rhein (DE)
(72) Inventor: LI, Shi Cheng, Shanghai 200137 (CN); WANG, Yi Heng, Shanghai 200137 (CN); HE, Ping, Shanghai 200137 (CN)
(74) Representative: BASF IP Association
(86) International application number: PCT/EP2018/062429
(87) International publication number: WO 2018/210777

(56) References cited:
- WO-A1-01/42162
- US-A1- 2005 119 151
- US-A1- 2010 210 761

## Description

### Technology Field

The invention relates to a defoamer emulsion, to a process for producing it, to a polycarboxylate ether formulation comprising the defoamer emulsion and to a use of the polycarboxylate ether formulation in a cement composition.

### Background

It is known to use polycarboxylate ether in cement composition. Polycarboxylate ether can increase the flowability of cement composition and reduce the water content thereof. The reduction of water content can increase the strength of the resulting cement formation.

However, the employment of polycarboxylate ether has a tendency to entrain air in the cement composition and an excess of entrained air is detrimental to the compressive strength of the resulting cement formation.

Defoamer can be added to the cement composition to remove the excess air entrained in the cement composition. Usually, a defoamer is added to the polycarboxylate ether formulation. However, the defoamer used is usually water insoluble and polycarboxylate ether is generally water soluble. When a defoamer is used in combination with a water soluble polycarboxylate ether, the resulted formulation will separate over time.

CN1244184A discloses chemical admixtures used in cement compositions. The admixtures are formed by emulsifying an antifoaming agent with a "comb" polymer having a carbon-containing backbone to which are attached cement-anchoring members and oxyalkylene groups. The example part of this application shows that the air content of the cement composition obtained by using said admixture is relatively high.

WO01/42162A1 describes an admixture for cementitious compositions comprising a water-insoluble defoamer, a dispersant for cementitious compositions, and a solubilizing agent capable of solubilizing the water-insoluble defoamer.

There is still a need to develop a stable deformer emulsion, by using of which a stable polycarboxylate ether formulation can be obtained.

### Summary of the Invention

It is therefore an object of the invention to provide a stable defoamer emulsion as defined in any one of claims 1 to 6, by using which a stable polycarboxylate ether formulation according to the present invention and as defined in any one of claims 9 to 11 can be obtained. The polycarboxylate ether formulation has excellent stability and the cement composition prepared by using the polycarboxylate ether formulation has a low air content.

Another object of the present invention is to provide a process for producing the defoamer emulsion as defined in any one of claims 7 to 8.

A further object of the present invention is to provide a process for producing the polycarboxylate ether formulation as defined in claim 12.

It has been surprisingly found that the above objects can be achieved by a special defoamer emulsion comprising at least one alkyl ether sulfate or sulfonate, at least one defoamer and water.

Therefore, the present invention relates to the following aspects.
1. A defoamer emulsion, which comprises at least one alkyl ether sulfate or sulfonate, at least one defoamer and water, wherein the alkyl in the alkyl ether sulfate or sulfonate is C₆-C₂₂ alkyl and the average droplet diameter of the emulsion is from 80 to 300 nm.
2. The defoamer emulsion according to item 1, wherein the alkyl in the alkyl ether sulfate or sulfonate is C₈-C₁₈ alkyl, preferably C₁₂-C₁₈ alkyl.
3. The defoamer emulsion according to item 1 or 2, wherein the alkyl ether sulfate or sulfonate is a sulfate or sulfonate of polyethoxylated alkanols.
4. The defoamer emulsion according to item 3, wherein the sulfate or sulfonate of polyethoxylated alkanols has 4 to 80 oxyethylene units, preferably 8 to 60 oxyethylene units, more preferably 12 to 50 oxyethylene units.
5. The defoamer emulsion according to any of items 1 to 4, wherein the defoamer is a water-insoluble defoamer.
6. The defoamer emulsion according to any of items 1 to 5, wherein the defoamer is selected from a silicon oil, a silicon containing emulsion, a fatty acid, a fatty acid ester, an organic modified polysiloxane, a borate ester, a polyalkoxylate, a polyoxyalkylene copolymer, acetylenic diols having defoaming properties and a phosphoric ester having the formula P(O)(OR₈)₃₋ₓ(OR₉)ₓ wherein P represents phosphorus, O represents oxygen and R₈ and R₉ are independently C₂-C₂₀ alkyl or C₆-C₁₄ aryl group and x is 0, 1 or 2, and mixtures thereof, preferably from a silicon oil, a silicon containing emulsion, an organic modified polysiloxane, a polyalkoxylate, a polyoxyalkylene copolymer, acetylenic diols having defoaming properties and a phosphoric ester having the formula P(O)(OR₈)₃₋ₓ(OR₉)ₓ wherein P represents phosphorus, O represents oxygen and R₈ and R₉ are independently C₂-C₈ alkyl and x is 0, 1 or 2, and mixture thereof, more preferably from the defoamer is selected from propoxylated alcohol, organic modified polysiloxane and mixture thereof.
7. The defoamer emulsion according to any of items 1 to 6, wherein the emulsion further comprises at least one additive selected from polyvinylpyrrolidone, diethanol amine, triethanol amine, ethylene glycol, urea, carbonate salt and mixture thereof.
8. The defoamer emulsion according to item 7, wherein said additive is used in an amount of from 5 to 15 wt% when the additive is polyvinylpyrrolidone, or in an amount of from 1 to 8 wt% when the additive is selected from diethanol amine, triethanol amine, ethylene glycol, urea, carbonate salt and mixture thereof, based on the total weight of the emulsion.
9. The defoamer emulsion according to item 7 or 8, wherein number average molecular weight of the polyvinylpyrrolidone is in the range from 5,000 to 20,000.
10. The defoamer emulsion according to any of items 1 to 9, wherein the average droplet diameter of the emulsion is from 90 to 250nm, preferably from 90 to 150nm.
11. The defoamer emulsion according to any of items 1 to 10, wherein the concentration of the alkyl ether sulfate or sulfonate in the defoamer emulsion is from 5 to 20 wt%, preferably from 8 to 15 wt%.
12. The defoamer emulsion according to any of items 1 to 11, wherein the weight ratio of the alkyl ether sulfate or sulfonate to the defoamer is from 0.15:1 to 0.8:1, preferably from 0.2:1 to 0.5:1, more preferably from 0.3:1 to 0.4:1.
13. A process for producing the defoamer emulsion according to any of items 1 to 12, which comprises
   step a) preparing a mixture comprising the alkyl ether sulfate or sulfonate, the defoamer and water;
   step b) optionally subjecting the mixture to a low shear, preferably the stirring rate in the low shear being in the range from 50 to 500 rpm, more preferably 100 to 300 rpm; and
   step c) shearing the mixture at a shear rate of at least 25,000 s⁻¹, preferably at least 50,000 s⁻¹, more preferably from 70,000 s⁻¹ to 180,000 s⁻¹ for at least 10 minutes, preferably at least 20 minutes, more preferably 20 to 120 minutes, most preferably 30 to 60 minutes.
14. The process according to item 13, wherein step a) is carried out by dissolving the alkyl ether sulfate or sulfonate in the water and adding the defoamer to the resulted solution or step a) is carried out by adding the alkyl ether sulfate or sulfonate and the defoamer to the water simultaneously.
15. A defoamer emulsion obtainable by the process according to item 13 or 14.
16. A polycarboxylate ether formulation, which comprises at least one polycarboxylate ether and a defoamer emulsion as defined in any of items 1 to 12 or item 15.
17. The polycarboxylate ether formulation according to item 16, wherein the polycarboxylate ether comprising a polycarboxylate moiety and an ether moiety.
18. The polycarboxylate ether formulation according to item 17, the polycarboxylate moiety is a carbon containing backbone bearing carboxylic acid group and/or an ester and/or salt thereof, and optional sulfonic acid group and/or a salt thereof.
19. The polycarboxylate ether formulation according to item 17 or 18, wherein the weight ratio between the polycarboxylate moiety and the ether moiety is from 3:7 to 99 :1, preferably from 4:6 to 95:5, more preferably from 6:4 to 8:2.
20. The polycarboxylate ether formulation according to any of items 16 to 19, wherein the content of the polycarboxylate ether in the polycarboxylate ether formulation is from 5 to 40 wt%, preferably 10 to 30 wt%, and the polycarboxylate ether formulation comprises 0.1 to 5 wt%, preferably 0.2 to 2 wt%, and most preferably 0.4 to 1 wt% of the defoamer emulsion as defined in any of items 1 to 12 or item 15, based on the total weight of the formulation.
21. A process for producing the polycarboxylate ether formulation according to any of items 16 to 20, which comprises mixing the defoamer emulsion as defined in any of items 1 to 12 or item 15 with the polycarboxylate ether.
22. A process according to item 21, wherein partial or total amount of additives as defined in any of items 7 to 9 are added when producing the polycarboxylate ether formulation.
23. Use of the polycarboxylate ether formulation as defined in any of items 16 to 20 in a cement composition, which comprises at least one cement.
24. The use according to item 23, wherein the cement is selected from portland cement, masonry cement, alumina cement, refractory cement, magnesia cement, calcium sulfoaluminate cement, oil well cement, and mixtures thereof.
25. The use according to item 23 or 24, wherein the cement composition comprises 0.05 to 1 wt%, preferably 0.1 to 0.3 wt% of the polycarboxylate ether formulation as defined in any of items 16 to 20.

### Embodiment of the Invention

The present invention provides a defoamer emulsion, which comprise at least one alkyl ether sulfate or sulfonate, at least one defoamer and water, wherein the alkyl in the alkyl ether sulfate or sulfonate is C₆-C₂₂-alkyl and the average droplet diameter of the emulsion is from 80 to 300 nm.

The undefined article "a", "an", "the" means one or more of the species designated by the term following said article. For example, "a silicon oil" encompasses one or more silicon oils.

According to one preferred embodiment, the alkyl in the alkyl ether sulfate or sulfonate is C₈-C₁₈ alkyl, preferably C₁₂-C₁₈ alkyl. In one embodiment, the alkyl ether sulfate or sulfonate is a sulfate or sulfonate of polyethoxylated alkanols. According to one preferred embodiment, the sulfate or sulfonate of polyethoxylated alkanols has 4 to 80 oxyethylene units, preferably 8 to 60 oxyethylene units, more preferably 12 to 50 oxyethylene units.

According to the present invention, the alkyl ether sulfate or sulfonate includes the ammonium salt, alkylamine salts, such as the isopropylamine salt, alkali metal salts, such as the sodium salt and alkaline earth metals salts, such as magnesium salt.

According to one preferred embodiment, the alkyl ether sulfate or sulfonate can be sodium lauryl ether sulfate or sulfonate comprising 15 to 50 oxyethylene units.

Alkyl ether sulfates or sulfonates can be prepared, for example, by firstly alkoxylating a C₆ to C₂₂-, preferably a C₈ to C₁₈-, more preferably a C₁₂ to C₁₈-fatty alcohol, and then sulfating the alkoxylation product. For the alkoxylation, preference is given to using ethylene oxide.

The concentration of the alkyl ether sulfate or sulfonate in the defoamer emulsion of the present invention can be from 5 to 20 wt%, preferably from 8 to 15 wt%.

In a preferred embodiment, the defoamer is a water-insoluble defoamer.

The defoamer in the defoamer emulsion of the present invention can be selected from a silicon oil, a silicon containing emulsion, a fatty acid, a fatty acid ester, an organic modified polysiloxane, a borate ester, a polyalkoxylate, preferably a propoxylated alcohol, a polyoxyalkylene copolymer, acetylenic diols having defoaming properties and a phosphoric ester having the formula P(O)(OR₈)₃₋ₓ(OR₉)ₓ wherein P represents phosphorus, O represents oxygen and R₈ and R₉ are independently C₂-C₂₀ alkyl or C₆-C₁₄ aryl group, preferably C₂-C₈ alkyl and x is 0, 1 or 2, and mixtures thereof.

In one preferred embodiment, the defoamer is selected from a silicon oil, a silicon containing emulsion, an organic modified polysiloxane, a polyalkoxylate, a polyoxyalkylene copolymer, acetylenic diols having defoaming properties and a phosphoric ester having the formula P(O)(OR₈)₃₋ₓ(OR₉) wherein P represents phosphorus, O represents oxygen and R₈ and R₉ are independently C₂-C₈ alkyl and x is 0, 1 or 2, and mixture thereof.

In one preferred embodiment, the defoamer is selected from propoxylated alcohol and organic modified polysiloxane such as arylalkyl-modified polysiloxanes, a,w-modified propoxylated polydimethyl siloxane, or else fluorosilicones. The number of propylene oxide units in the a,w-modified propoxylated polydimethyl siloxane can be from 20 to 50, preferably 25 to 45.

According to one preferred embodiment, the propoxylated alcohol is a propoxylated C₇-C₂₀ alcohol, preferably a propoxylated C₁₀-C₁₈ alcohol or propoxylated mixture of alcohols containing 7 to 20 carbon atoms. The number of propylene oxide units in the propoxylated alcohol can be from 12 to 50, preferably 18 to 30.

According to one preferred embodiment of the present invention, the weight ratio of the alkyl ether sulfate or sulfonate to the defoamer is from 0.15:1 to 0.8:1, preferably from 0.2:1 to 0.5:1, more preferably from 0.3:1 to 0.4:1.

In an embodiment, the defoamer emulsion further comprises at least one additive for improving the low-temperature stability, which can be selected from polyvinylpyrrolidone, diethanol amine, triethanol amine, ethylene glycol, urea and carbonate salt (preferably alkali carbonate, for example sodium carbonate and potassium carbonate) and mixture thereof. The number average molecular weight of polyvinylpyrrolidone can be from 5,000 to 20,000. The polyvinylpyrrolidone, when used, is used typically in an amount of from 5 to 15 wt%, based on the total weight of the polycarboxylate ether formulation. Diethanol amine, triethanol amine, ethylene glycol, urea and potassium carbonate, when used, is used typically in an amount of from 1 to 8 wt%, preferably from 2 to 5 wt%, based on the total weight of the polycarboxylate ether formulation.

In one preferred embodiment, the average droplet diameter of defoamer emulsion according to the present invention is from 90 to 250 nm, preferably from 90 to 150 nm. Before testing the average droplet diameter, defoamer emulsion can be diluted 500 times by deionized water, for example 0.2 g defoamer emulsion can be diluted by 99.8 g deionized water.

A further embodiment of the present invention relates to a process for producing the defoamer emulsion according to the present invention, which comprises
step a) preparing a mixture comprising the alkyl ether sulfate or sulfonate, the defoamer and water;
step b) optionally subjecting the mixture to a low shear, preferably the stirring rate in the low shear being in the range from 50 to 500 rpm, more preferably 100 to 300 rpm; and
step c) shearing the mixture at a shear rate of at least 25,000 s⁻¹, preferably at least 50,000 s⁻¹, more preferably from 70,000 s⁻¹ to 180,000 s⁻¹ for at least 10 minutes, preferably at least 20 minutes, more preferably 20 to 120 minutes, most preferably 30 to 60 minutes.

According to the present invention, step a) can be carried out by dissolving the alkyl ether sulfate or sulfonate in the water and adding the defoamer to the resulted solution. Step a) can also be carried out by adding the alkyl ether sulfate or sulfonate and the defoamer to the water simultaneously.
Step b) is a low shear step and is an optional step. A rough emulsion can be obtained by step b).
Step c) is a high shear step. A fine emulsion with average droplet diameter as defined above can be obtained by step c).

One aspect of the present invention is directed to a defoamer emulsion obtainable by the process as defined above.

A further embodiment of the present invention relates to a polycarboxylate ether formulation, which comprises at least one polycarboxylate ether and the defoamer emulsion according to the present invention.

The polycarboxylate ether used in the present invention can be a copolymer comprising a polycarboxylate moiety and an ether moiety.

In one preferred embodiment, the polycarboxylate moiety can be a carbon containing backbone bearing carboxylic acid group and/or an ester and/or salt thereof, and optional sulfonic acid group and/or a salt thereof.

Preferably the polycarboxylate ether includes two co-monomer components wherein co-monomer component a1) is:
an olefinic unsaturated mono-carboxylic acid co-monomer and/or an ester and/or salt thereof, and/or an olefinic unsaturated sulfonic acid compound as further co-monomer and/or a salt thereof,
and co-monomer component a2) is:
   a co-monomer according to the general formula (I)
   wherein R₁ is 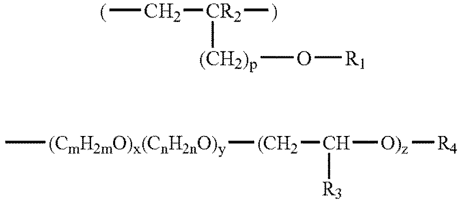
   and whereby R₂ is H or aliphatic hydrocarbon group having from 1 to 5 carbon atoms, R₃ is non-substituted or substituted C₆ to C₁₄-aryl group and preferably phenyl, and R₄ is H or aliphatic hydrocarbon group having from 1 to 20 carbon atoms, cycloaliphatic hydrocarbon group having from 5 to 8 carbon atoms, substituted aryl group having from 6 to 14 carbon atoms or a group selected from 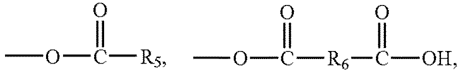 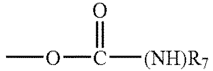
   wherein R₅ and R₇ may each be C₁ to C₅-alkyl, C₆ to C₁₄-aryl, C₆ to C₁₀-aralkyl or C₆ to C₁₀-alkaryl group and R₆ may be C₁ to C₆-alkyliden, C₆ to C₁₄-aryliden, C₆ to C₁₀-aralkyliden or C₆ to C₁₀-alkaryliden group and p is 0, 1, 2 or 3, m and n is independently 2, 3, 4 or 5, x and y are independently and integer from 1 to 350, preferably 5 to 200, more preferably 10 to 60, and z is in the range from 0 to 200, preferably is 0 to 100, more preferably is 0 to 50.

Usually, these polymers based on their dispersing properties show excellent plasticizing effects over time and additionally can be prepared by using usual preparation methods. Another aspect may be that the copolymers show their plasticizing effect not only together with specific hydraulic components, but in the field of cementitious mortar and concrete. Additionally, the improved effect of the copolymers can be selectively chosen based on the broad variety of the ether co-monomer and especially based on the broad scope of the side chain length.

The copolymer exhibits especially more advantageous properties when the weight ratio between the polycarboxylate moiety, preferably the co-monomer component a1) and the ether moiety, preferably the ether component a2) is from 3:7 to 99:1.

As used herein, the mentioned co-monomers components a1) and a2), respectively, are to be interpreted as structural units of the copolymer after its polymerization.

In a preferred embodiment, the weight ratio between the polycarboxylate moiety, preferably the co-monomer component a1) and the ether moiety, preferably the co-monomer a2) is from 4:6 to 95:5, preferably from 6:4 to 8:2.

In a preferred embodiment, the ether component a2) with p being 0 or 1 is represented by a vinyl or an allyl group and additionally contains a polyether, preferably polyethylene oxide as R₁. The co-monomer component a1) can be an acrylic acid or a salt thereof.

In general, according to the present invention, the co-monomer component a1) is selected from the group consisting of acrylic acid, methacrylic acid, crotonic acid, isocrotonic acid, maleic acid, fumaric acid, citraconic acid, itaconic acid, (meth)allyl sulfonic acid, vinyl sulfonic acid, and their suitable salts or their alkyl or hydroxyalkyl esters, or mixtures thereof.

Alternatively, other co-monomers, such as styrene or acrylamides may be additionally co-polymerized with the ether component a2) and co-monomer component a1). Alternatively, components with hydrophobic properties may be used. Compounds with ether structural units, such as polypropylene oxide or polypropylene oxide-polyethylene oxide (PO/PE) or polybutylene oxide-polyoxyethylene oxide (PB/PE) or polystyrene oxide-polyethylene oxide (PS/PE)-units are preferred. These additional structural units should be represented in the copolymer in amounts up to 5 wt%; amounts from 0.05 to 3 wt% and 0.1 to 1.0 wt% are preferred.

The number average molar mass of polycarboxylate ether can be in the range
from 8,000 g mol⁻¹ to 100,000 g mol⁻¹, preferably from 10,000 g mol⁻¹ to 50,000 g mol⁻¹.

The copolymers can be produced by relatively simple methods and especially when the polymerisation is carried out in an oxygen-depleted or oxygen-free atmosphere. There also may be added some amounts of solvents to make the ether component soluble. In the case that co-monomer a2) is a poly-alcoholic group or an alkylene oxide derivatived poly-alcohol group, and R₂ of the ether component is hydrogen, respectively, water is the solvent to be preferred. Alternatively, a mixture of water and alcohol, such as isopropanol, may be added. In the case that R₂ is other than hydrogen, then organic solvents and especially toluene is to be seen as preferred.

For starting the polymerisation reaction, the basic mixture is heated to ambient temperature or smoothly cooled down. Another suitable alternative may be the addition of a redox system as initiator component. This redox system may comprise reducing and oxidizing agents and preferably Rongalite^{®} or Bruggolite^{®} and additionally a peroxide or a persulfate like H₂O₂ or ammonia persulfate. These reagents may be preferably used in systems with water as solvent. Rongalite^{®}, also called Rongalit^{®} (registered trademark of BASF) is sodium hydroxymethylsulfinate. The salt is water-soluble and generally sold as the dihydrate. This salt is prepared from sodium dithionite, it is used both as a reducing agent and as a reagent to introduce SO₂ groups into organic molecules. Bruggolite^{®} (Brüggolit^{®}) of Brüggemann Chemicals is a sodium formaldehyde sulfoxylate (SFS) based reducing agent for the textile, pharmaceutical and bleaching industry.

In principle, two alternatives may be selected to produce the copolymers:

### Alternative A:

The co-monomer mixture and the reducing agent containing mixture are to be added to the ether containing mixture stepwise or continuously; the temperatures range from 0 to 50° C.

### Alternative B:

The mixture containing the oxidizing agent is to be added stepwise to the complete monomer mixture.

Then the reaction mixture is usually stirred until all the peroxide has reacted. In the case that organic solvents are to be used, these will be distilled. The reaction product will then be cooled down and the copolymer is to be neutralized by using a base (such as alkali metals or alkaline earth metals hydroxide, amines or alkanol amines). The addition of an aqueous solution comprising sodium or calcium hydroxide is a preferred alternative.

This disclosed process represents an example for producing the polycarboxylate ether.

The content of the polycarboxylate ether in the polycarboxylate ether formulation is from 5 to 40 wt%, preferably 10 to 30 wt%, based on the total weight of the formulation.

The polycarboxylate ether formulation comprises 0.1 to 5 wt%, preferably 0.2 to 2 wt%, and most preferably 0.4 to 1 wt% of the defoamer emulsion of the present invention, based on the total weight of the formulation.

The polycarboxylate ether formulation according to the present invention can be prepared by mixing the defoamer emulsion according to the present invention with the polycarboxylate ether. According to the present invention, water and optional additive can be further added to prepare the polycarboxylate ether formulation.

According to one embodiment, partial or total amount of additives for improving the low-temperature stability as defined above can be added when preparing the polycarboxylate ether formulation, which means partial or total amount of additives for improving the low-temperature stability are not added when preparing the defoamer emulsion. For example, 20 to 100 % by weight, preferably from 40 to 80% by weight of said additives can be added when preparing the polycarboxylate ether formulation, based on the total amount of said additives in the polycarboxylate ether formulation.

A further embodiment of the present invention relates to a use of the polycarboxylate ether formulation according to the present invention in a cement composition comprising at least one cement.

Cements are used to form structural formations. According to the present invention, the cement can be selected from portland cement, masonry cement, alumina cement, refractory cement, magnesia cement, calcium sulfoaluminate cement, oil well cement, and mixtures thereof.

The polycarboxylate ether formulation according to the present invention in a cement composition can be used in combination with any other admixture or additive for cement. Other cement admixtures and additives include, but are not limited to, set retarders, set accelerators, air detraining agents, corrosion inhibitors, any other dispersants for cement, pigments, wetting agents, water soluble polymers, strength enhancing agents, rheology modifying agents, water repellents, and any other admixture or additive that does not adversely affect the properties of the admixture of the present invention.

In one embodiment, 0.05 to 1 wt%, preferably 0.1 to 0.3 wt% of the polycarboxylate ether formulation according to the present invention are used in the cement composition.

The defoamer emulsion of the present invention possesses excellent stability. The polycarboxylate ether formulation comprising the defoamer emulsion of the present invention also shows excellent stability, for example, the polycarboxylate ether formulation does not show phase separation at a temperature from 5_{°}C to 50_{°}C over a period of more than 2 months (even more than 6 months in some cases). The cement composition comprises the polycarboxylate ether formulation according to the present invention has a low air content.

Further embodiments of the present invention are described in the claims, the description and the examples. It goes without saying that the features mentioned above and features still to be explained below of the subject matter of the invention can be used not only in the combination indicated in each case but also in other combinations without going outside the scope of the invention.

The advantages of the invention are illustrated by the following examples.

### Examples

### A) Substances used

SLES1 (Sodium lauryl ether sulfate, 50EO, 32 wt% in water);
SLES2 (Sodium lauryl ether sulfate, 30EO, 32 wt% in water);
SLES3 (Sodium lauryl ether sulfate, 12EO, 30 wt% in water);
Calfax DB45 (diphenyl oxide disulfonate, 45 wt% in water, DOW);
SLS (sodium lauryl sulfate, 30 wt% in water);
AEO30 (C13-Oxo alcohol ethoxylate, 30EO, 70 wt% in water)
AEO40 (C13-Oxo alcohol ethoxylate, 40EO, 70 wt% in water);
Defoamer HS-568 (Propoxylated C₇-C₂₀ alcohol mixture, about 20PO, 100%, San Nopco);
POPDMS (Modified silicone, a,w-modified propoxylated polydimethyl siloxane, molar mass of the polydimethyl siloxane = 1000 g mol⁻¹, about 35PO, 100%);
PES (an aqueous polycarboxylate ether solution, 50wt%, wherein the polycarboxylate ether is a copolymer of polyacrylic acid and allyl polyethylene glycol (weight ratio = 3:1), 45EO, number average molar mass = ~20,000 g mol⁻¹)

### B) Test method

### - Light transmittance

0.05g of defoamer emulsion prepared in the following examples or comparative examples is dispersed in 49.95g of deionized water. The sample is transferred to the cuvette. The transmittance of the sample is measured with light at 600nm by using DR/2010 from HACH. The results are shown in table 1.

To test the stability of the defoamer emulsions, the defoamer emulsions prepared in the following examples and comparative examples are stored over a period of 6 months at room temperature (RT) after preparation. Then, the light transmittances of the resulted defoamer emulsions are tested according to the above procedure. The results are shown in table 1.

### - Formulation stability test

The polycarboxylate ether formulations prepared below are put in the oven (at 50 °C) and the fridge (at 5 °C) to observe phase separation visibly. The results are shown in table 2.

### - Air content test

Air content of concrete prepared below is measured according to ASTM C 185(1995) and the results are shown in table 4.

### - Average droplet diameter test

The test sample is prepared by adding 0.2 g of the defoamer emulsion obtained in the following examples or comparative examples to 99.8 g deionized water. The average droplet diameter is measured by using the Malvern Nanosizer ZS 90 and is shown in table 1.

### Examples 1 to 10 and Comparative examples 1 to 4: preparation of the defoamer emulsion

### Example 1

28.125g of SLES2 is dissolved in 44.875 g deionized water. Then, 27 g of HS-568 is added and stirred with a propeller at 200 rpm for 10 minutes, which then results in a rough emulsion. The rough emulsion is then subjected to an IKA Ultra-Turrax high-speed homogenizer with a S50B-G45G dispersing head and a T65 control unit at 20000 rpm (corresponding to shear rate of ~60,000 s⁻¹) for 30 minutes, which then results in a fine emulsion.

### Example 2

30 g of SLES3 is dissolved in 43 g deionized water. Then, 27 g of HS-568 is added and stirred with a propeller at 200 rpm for 10 minutes, which then results in a rough emulsion. The rough emulsion is then subjected to an IKA Ultra-Turrax high-speed homogenizer with a S50B-G45G dispersing head and a T65 control unit at 20000 rpm (corresponding to shear rate of ~60,000 s-¹) for 30 minutes, which then results in a fine emulsion.

### Example 3

30 g of SLES1 is dissolved in 43 g deionized water. Then, 27 g of HS-568 is added and stirred with a propeller at 200 rpm for 10 minutes, which then results in a rough emulsion. The rough emulsion is then subjected to an IKA Ultra-Turrax high-speed homogenizer with a S50B-G45G dispersing head and a T65 control unit at 20000 rpm (corresponding to shear rate of ~60,000 s-¹) for 30 minutes, which then results in a fine emulsion.

### Example 4

33.75 g of SLES2 is dissolved in 39.25 g deionized water. Then, 27 g of HS-568 is added and stirred with a propeller at 200 rpm for 10 minutes, which then results in a rough emulsion. The rough emulsion is then subjected to an IKA Ultra-Turrax high-speed homogenizer with a S50B-G45G dispersing head and a T65 control unit at 20000 rpm (corresponding to shear rate of ~60,000 s⁻¹) for 30 minutes, which then results in a fine emulsion.

### Example 5

42.18 g of SLES2 is dissolved in 30.81 g deionized water. Then, 27 g of HS-568 is added and stirred with a propeller at 200 rpm for 10 minutes, which then results in a rough emulsion. The rough emulsion is then subjected to an IKA Ultra-Turrax high-speed homogenizer with a S50B-G45G dispersing head and a T65 control unit at 20000 rpm (corresponding to shear rate of ~60,000 s⁻¹) for 30 minutes, which then results in a fine emulsion.

### Example 6

The procedure of Example 1 was repeated with the difference that the rough emulsion is subjected to an IKA Ultra-Turrax high-speed homogenizer with a S50B-G45G dispersing head and a T65 control unit at 10000 rpm (corresponding to shear rate of ~30,000 s⁻¹) for 30 minutes.

### Example 7

The procedure of Example 1 was repeated with the difference that the rough emulsion is subjected to an IKA Ultra-Turrax high-speed homogenizer with a S50B-G45G dispersing head and a T65 control unit at 40000 rpm (corresponding to shear rate of ~120,000 s⁻¹) for 30 minutes.

### Example 8

28.125g of SLES2 is dissolved in 44.875 g water. Then, 27 g of POPDMS is added and stirred with a propeller at 200 rpm for 10 minutes, which then results in a rough emulsion. The rough emulsion is then subjected to an IKA Ultra-Turrax high-speed homogenizer with a S50B-G45G dispersing head and a T65 control unit at 20000 rpm (corresponding to shear rate of ~60,000 s-¹) for 30 minutes, which then results in a fine emulsion.

### Example 9

28.125g of SLES2 and 27 g of HS-568 are added in 44.875 g deionized water simultaneously and stirred with a propeller at 200 rpm for 10 minutes, which results in a rough emulsion. The rough emulsion is then subjected to an IKA Ultra-Turrax high-speed homogenizer with a S50B-G45G dispersing head and a T65 control unit at 20000 rpm (corresponding to shear rate of ~60,000 s⁻¹) for 30 minutes, which then results in a fine emulsion.

### Example 10

28.125g of SLES2 is dissolved in 44.875 g deionized water. Then, 27 g of HS-568 is added and stirred with a propeller at 200 rpm for 10 minutes, which results in a rough emulsion. The rough emulsion is then subjected to an IKA Ultra-Turrax high-speed homogenizer with a S50B-G45G dispersing head and a T65 control unit at 20000 rpm (corresponding to shear rate of ~60,000 s-¹) for 60 minutes, which then results in a fine emulsion.

### Example 11

28.125g of SLES2 is dissolved in 44.875 g deionized water. Then, 27 g of HS-568 is added. The mixture is then directly subjected to an IKA Ultra-Turrax high-speed homogenizer with a S50B-G45G dispersing head and a T65 control unit at 20000 rpm (corresponding to shear rate of ~60,000 s⁻¹) for 30 minutes, which then results in a fine emulsion.

### Example 12

28.125g of SLES2 and 4g of diethanol amine is dissolved in 40.875 g deionized water. Then, 27 g of HS-568 is added and stirred with a propeller at 200 rpm for 10 minutes, which then results in a rough emulsion. The rough emulsion is then subjected to an IKA Ultra-Turrax high-speed homogenizer with a S50B-G45G dispersing head and a T65 control unit at 20000 rpm (corresponding to shear rate of ~60,000 s⁻¹) for 30 minutes, which then results in a fine emulsion.

### Comparative example 1

28.125g of SLES2 is dissolved in 44.875 g water. Then, 27 g of HS-568 is added and stirred with a propeller at 200 rpm for 10 minutes. No high-shear mixing is applied.

### Comparative example 2

10 g of Calfax DB45 and 6.43 g of AEO40 are dissolved in 56.57 g water. Then, 27g of HS568 is added and stirred with a propeller at 200rpm for 10 minutes. The rough emulsion is then subjected to an IKA Ultra-Turrax high-speed homogenizer with a S50B-G45G dispersing head and a T65 control unit at 20000 rpm (corresponding to shear rate of ~60,000 s⁻¹) for 30 minutes.

### Comparative example 3

10.0 g of SLS and 8.57 g of AEO30 are dissolved in 54.43 g water. Then, 27g of HS568 is added and stirred with a propeller at 200rpm for 10 minutes. The rough emulsion is then subjected to an IKA Ultra-Turrax high-speed homogenizer with a S50B-G45G dispersing head and a T65 control unit at 20000 rpm (corresponding to shear rate of ~60,000 s⁻¹) for 30 minutes

### Comparative example 4

27 g of Disponil HS568 is added in 64 g water and stirred with a propeller at 200 rpm for 10 minutes, which results in a rough emulsion. The rough emulsion is then subjected to an IKA Ultra-Turrax high-speed homogenizer with a S50B-G45G dispersing head and a T65 control unit at 20000 rpm (corresponding to shear rate of ~60,000 s⁻¹) for 30 minutes.

The properties of the defoamer emulsions obtained in examples 1 to 10 and comparative 1 to 4 are shown in the following table 1.

**Table 1**

| Example No. | Transmittance | Transmittance after 6 months storage at RT | Defoamer emulsion stability | average droplet diameter |
|---|---|---|---|---|
| Example 1 | 82% | 78% | ++ | 120 nm |
| Example 2 | 83% | 79% | ++ | 125 nm |
| Example 3 | 81% | 78% | ++ | 116 nm |
| Example 4 | 82% | 79% | ++ | 119 nm |
| Example 5 | 82% | 77% | + | 120 nm |
| Example 6 | 75% | 67% | + | 250 nm |
| Example 7 | 95% | 90% | + | 95 nm |
| Example 8 | 85% | 82% | ++ | 118 nm |
| Example 9 | 82% | 78% | ++ | 120 nm |
| Example 10 | 90% | 88% | ++ | 101 nm |
| Example 11 | 82% | 78% | ++ | 120 nm |
| Example 12 | 82% | 78% | ++ | 118 nm |
| Comparative example 1 | 23% | Not measurable | - | 1000 nm |
| Comparative example 2 | 52% | Not measurable | - | 720 nm |
| Comparative example 3 | 51% | Not measurable | - | 732 nm |
| Comparative example 4 | 20% | Not measurable | - | 1134 nm |

| | | | | |
|---|---|---|---|---|
| ++: transmittance% decreases less than 5% after the defoamer emulsion is stored over a period of 6 months at room temperature. +: transmittance% decreases by 5-15% after the defoamer emulsion is stored over a period of 6 months at room temperature. -: complete phase separation after ~ 5 days storage at room temperature | | | | |

### Preparation of the Polycarboxylate ether formulations

The PES (aqueous polycarboxylate ether solution, 50 wt%) is diluted to 25 wt% with deionized water. Each defoamer emulsion (0.6 g) prepared in above examples 1 to 10 and comparative examples 1 to 4 is then added to 99.4g of the diluted aqueous polycarboxylate ether solution and mixed well using a hot plate at room temperature with stirring rate of ~100 rpm to obtain the polycarboxylate ether formulation.

The properties of the polycarboxylate ether formulations are shown in the following table 2.

**Table 2**

| The defoamer emulsion in the Formulation from Example No. | Formulation stability at 50 °C | Formulation stability at 25 °C | Formulation stability at 5 °C |
|---|---|---|---|
| Example 1 | >6 months | >6 months | >6 months |
| Example 2 | >6 months | >6 months | >6 months |
| Example 3 | >6 months | >6 months | ~4 months |
| Example 4 | >6 months | >6 months | >6 months |
| Example 5 | >6 months | >6 months | >6 months |
| Example 6 | ~3 months | ~3 months | ~3 months |
| Example 7 | >6 months | >6 months | >6 months |
| Example 8 | >6 months | >6 months | ~2 months |
| Example 9 | >6 months | >6 months | >6 months |
| Example 10 | >6 months | >6 months | >6 months |
| Example 11 | >6 months | >6 months | ~6 months |
| Example 12 | >6 months | >6 months | >10 months |
| Comparative example 1 | Separation within 2 days | Separation within 2 days | Separation within 2 days |
| Comparative example 2 | Separation within 5 days | Separation within 8 days | Separation within 10 days |
| Comparative example 3 | Separation within 5 days | Separation within 7 days | Separation within 10 days |
| Comparative example 4 | Separation within 2 days | Separation within 2 days | Separation within 2 days |

### Preparation of the concrete

Each polycarboxylate ether formulation prepared above (0.042kg) is mixed with the ingredients shown in table 3 to prepare the concrete.

**Table 3**

| Component | Amount / kg |
|---|---|
| Cement (Hailuo cement 425) | 4.20 |
| Sand | 8.40 |
| Stone (diameter from 5mm to 15mm) | 9.20 |
| water | 1.70 |

Air contents in concretes prepared above are shown in the following table 4.

**Table 4**

| The defoamer emulsion in the Formulation from Example No. | Air content in concrete |
|---|---|
| Example 1 | 1.0% |
| Example 2 | 0.9% |
| Example 3 | 1.0% |
| Example 4 | 1.6% |
| Example 5 | 2.2% |
| Example 6 | 1.0% |
| Example 7 | 1.0% |
| Example 8 | 2.5% |
| Example 9 | 1.0% |
| Example 10 | 1.0% |
| Example 11 | 1.0% |
| Example 12 | 1.0% |
| Comparative example 1 | 1.0% |
| Comparative example 2 | 1.0% |
| Comparative example 3 | 1.1% |
| Comparative example 4 | 1.0% |

## Claims

1. A defoamer emulsion, which comprises at least one alkyl ether sulfate or sulfonate, at least one defoamer and water, wherein the alkyl in the alkyl ether sulfate or sulfonate is C₆-C₂₂ alkyl and the average droplet diameter of the emulsion is from 80 to 300 nm.

2. The defoamer emulsion according to claim 1, wherein the alkyl in the alkyl ether sulfate or sulfonate is C₈-C₁₈ alkyl, preferably C₁₂-C₁₈ alkyl.

3. The defoamer emulsion according to claim 1 or 2, wherein the alkyl ether sulfate or sulfonate is a sulfate or sulfonate of polyethoxylated alkanols, wherein the sulfate or sulfonate of polyethoxylated alkanols has preferably 4 to 80 oxyethylene units, more preferably 8 to 60 oxyethylene units, most preferably 12 to 50 oxyethylene units.

4. The defoamer emulsion according to any of claims 1 to 3, wherein:
the defoamer is a water-insoluble defoamer; and/or
the defoamer is selected from a silicon oil, a silicon containing emulsion, a fatty acid, a fatty acid ester, an organic modified polysiloxane, a borate ester, a polyalkoxylate, a polyoxyalkylene copolymer, acetylenic diols having defoaming properties and a phosphoric ester having the formula P(O)(OR₈)₃₋ₓ(OR₉)ₓ wherein P represents phosphorus, O represents oxygen and R₈ and R₉ are independently C₂-C₂₀ alkyl or C₆-C₁₄ aryl group and x is 0, 1 or 2, and mixtures thereof, preferably from a silicon oil, a silicon containing emulsion, an organic modified polysiloxane, a polyalkoxylate, a polyoxyalkylene copolymer, acetylenic diols having defoaming properties and a phosphoric ester having the formula P(O)(OR₈)₃₋ₓ(OR₉)ₓ wherein P represents phosphorus, O represents oxygen and R₈ and R₉ are independently C₂-C₈ alkyl and x is 0, 1 or 2, and mixture thereof, more preferably from the defoamer is selected from propoxylated alcohol, organic modified polysiloxane and mixture thereof.

5. The defoamer emulsion according to any of claims 1 to 4, wherein the emulsion further comprises at least one additive selected from polyvinylpyrrolidone, diethanol amine, triethanol amine, ethylene glycol, urea, carbonate salt and mixture thereof, wherein preferably said additive is used in an amount of from 5 to 15 wt% when the additive is polyvinylpyrrolidone, or in an amount of from 1 to 8 wt% when the additive is selected from diethanol amine, triethanol amine, ethylene glycol, urea, carbonate salt and mixture thereof, based on the total weight of the emulsion.

6. The defoamer emulsion according to claim 5, wherein number average molecular weight of the polyvinylpyrrolidone is in the range from 5,000 to 20,000, and/or wherein the average droplet diameter of the emulsion is preferably from 90 to 250nm, more preferably from 90 to 150nm, and/or wherein the concentration of the alkyl ether sulfate or sulfonate in the defoamer emulsion is preferably from 5 to 20 wt%, more preferably from 8 to 15 wt%, and/or wherein the weight ratio of the alkyl ether sulfate or sulfonate to the defoamer is preferably from 0.15:1 to 0.8:1, more preferably from 0.2:1 to 0.5:1, most preferably from 0.3:1 to 0.4:1.

7. A process for producing the defoamer emulsion according to any of claims 1 to 6, which comprises
step a) preparing a mixture comprising the alkyl ether sulfate or sulfonate, the defoamer and water;
step b) optionally subjecting the mixture to a low shear, preferably the stirring rate in the low shear being in the range from 50 to 500 rpm, more preferably 100 to 300 rpm; and
step c) shearing the mixture at a shear rate of at least 25,000 s⁻¹, preferably at least 50,000 s⁻¹, more preferably from 70,000 s⁻¹ to 180,000 s⁻¹ for at least 10 minutes, preferably at least 20 minutes, more preferably 20 to 120 minutes, most preferably 30 to 60 minutes.

8. The process according to claim 7, wherein step a) is carried out by dissolving the alkyl ether sulfate or sulfonate in the water and adding the defoamer to the resulted solution or step a) is carried out by adding the alkyl ether sulfate or sulfonate and the defoamer to the water simultaneously.

9. A polycarboxylate ether formulation, which comprises at least one polycarboxylate ether and a defoamer emulsion as defined in any of claims 1 to 6.

10. The polycarboxylate ether formulation according to claim 9, wherein the polycarboxylate ether comprises a polycarboxylate moiety and an ether moiety, wherein the polycarboxylate moiety is preferably a carbon containing backbone bearing carboxylic acid group and/or an ester and/or salt thereof, and optional sulfonic acid group and/or a salt thereof.

11. The polycarboxylate ether formulation according to claim 10, wherein the weight ratio between the polycarboxylate moiety and the ether moiety is from 3:7 to 99 : 1, preferably from 4:6 to 95:5, more preferably from 6:4 to 8:2, and/or wherein the content of the polycarboxylate ether in the polycarboxylate ether formulation is preferably from 5 to 40 wt%, more preferably 10 to 30 wt%, and the polycarboxylate ether formulation comprises 0.1 to 5 wt%, preferably 0.2 to 2 wt%, and most preferably 0.4 to 1 wt% of the defoamer emulsion as defined in any of claims 1 to 6, based on the total weight of the formulation.

12. A process for producing the polycarboxylate ether formulation according to any of claims 9 to 11, which comprises mixing the defoamer emulsion as defined in any of claims 1 to 6 with the polycarboxylate ether, wherein preferably partial or total amount of additives as defined in any of claims 5 to 6 are added when producing the polycarboxylate ether formulation.

13. Use of the polycarboxylate ether formulation as defined in any of claims 9 to 11 in a cement composition, which comprises at least one cement, wherein the cement is preferably selected from portland cement, masonry cement, alumina cement, refractory cement, magnesia cement, calcium sulfoaluminate cement, oil well cement, and mixtures thereof.

14. The use according to claim 13, wherein the cement composition comprises 0.05 to 1 wt%, preferably 0.1 to 0.3 wt% of the polycarboxylate ether formulation as defined in any of claims 9 to 11.

## Patentansprüche

1. Entschäumeremulsion, die wenigstens ein Alkylethersulfat oder -sulfonat, wenigstens einen Entschäumer und Wasser umfasst, wobei das Alkyl in dem Alkylethersulfat oder -sulfonat C₆-C₂₂-Alkyl ist und der mittlere Tröpfchendurchmesser der Emulsion von 80 bis 300 nm beträgt.

2. Entschäumeremulsion nach Anspruch 1, wobei das Alkyl in dem Alkylethersulfat oder -sulfonat C₈-C₁₈-Alkyl, vorzugsweise C₁₂-C₁₈-Alkyl, ist.

3. Entschäumeremulsion nach Anspruch 1 oder 2, wobei das Alkylethersulfat oder -sulfonat ein Sulfat oder Sulfonat von polyethoxylierten Alkanolen ist, wobei das Sulfat oder Sulfonat von polyethoxylierten Alkanolen vorzugsweise 4 bis 80 Oxyethyleneinheiten, bevorzugter 8 bis 60 Oxyethyleneinheiten, höchst bevorzugt 12 bis 50 Oxyethyleneinheiten, aufweist.

4. Entschäumeremulsion nach einem der Ansprüche 1 bis 3, wobei:
der Entschäumer ein wasserunlöslicher Entschäumer ist; und/oder
der Entschäumer ausgewählt ist aus einem Siliconöl, einer silionhaltigen Emulsion, einer Fettsäure, einem Fettsäureester, einem organisch modifizierten Polysiloxan, einem Boratester, einem Polyalkoxylat, einem Polyoxyalkylen-Copolymer, acetylenischen Diolen mit entschäumenden Eigenschaften und einem Phosphorsäureester der Formel P(O)(OR₈)₃₋ₓ(OR₉)ₓ, wobei P Phosphor darstellt, O Sauerstoff darstellt und R₈ und R₉ unabhängig C₂-C₂₀-Alkyl- oder C₆-C₁₄-Arylgruppe sind und x 0, 1 oder 2 ist, und Gemischen davon, vorzugsweise aus einem Siliconöl, einer siliconhaltigen Emulsion, einem organisch modifizierten Polysiloxan, einem Polyalkoxylat, einem Polyoxyalkylen-Copolymer, acetylenischen Diolen mit entschäumenden Eigenschaften und einem Phosphorsäureester der Formel P(O)(OR₈)₃-ₓ(OR₉)ₓ, wobei P für Phosphor steht, O für Sauerstoff steht und R₈ und R₉ unabhängig C₂-C₈-Alkyl sind und x 0, 1 oder 2 ist, und Gemischen davon, wobei der Entschäumer bevorzugter ausgewählt ist aus propoxyliertem Alkohol, organisch modifiziertem Polysiloxan und einem Gemisch davon.

5. Entschäumeremulsion nach einem der Ansprüche 1 bis 4, wobei die Emulsion ferner wenigstens einen Zusatz ausgewählt aus Polyvinylpyrrolidon, Diethanolamin, Triethanolamin, Ethylenglycol, Harnstoff, Carbonatsalz und Gemisch davon umfasst, wobei der Zusatz vorzugsweise in einer Menge von 5 bis 15 Gew.-%, wenn der Zusatz Polyvinylpyrrolidon ist, oder in einer Menge von 1 bis 8 Gew.-%, wenn der Zusatz ausgewählt ist aus Diethanolamin, Triethanolamin, Ethylenglykol, Harnstoff, Carbonatsalz und Gemisch davon, bezogen auf das Gesamtgewicht der Emulsion, verwendet wird.

6. Entschäumeremulsion nach Anspruch 5, wobei das anzahlgemittelte Molekulargewicht des Polyvinylpyrrolidons in dem Bereich von 5.000 bis 20.000 liegt und/oder wobei der mittlere Tröpfchendurchmesser der Emulsion vorzugsweise von 90 bis 250 nm, bevorzugter von 90 bis 150 nm, beträgt und/oder wobei die Konzentration des Alkylethersulfats oder -sulfonats in der Entschäumeremulsion vorzugsweise 5 bis 20 Gew.-%, bevorzugter von 8 bis 15 Gew.-%, beträgt und/oder wobei das Gewichtsverhältnis des Alkylethersulfats oder - sulfonats zu dem Entschäumer vorzugsweise von 0,15:1 bis 0,8:1, bevorzugter von 0,2:1 bis 0,5:1, höchst bevorzugt von 0,3:1 bis 0,4:1, beträgt.

7. Verfahren zur Herstellung der Entschäumeremulsion nach einem der Ansprüche 1 bis 6, umfassend Schritt a) Herstellen eines Gemischs umfassend das Alkylethersulfat oder -sulfonat, den Entschäumer und Wasser;
Schritt b) gegebenenfalls Unterwerfen des Gemischs an eine niedrigen Scherkraft, wobei die Rührgeschwindigkeit bei der niedrigen Scherkraft vorzugsweise in dem Bereich von 50 bis 500 U/min, bevorzugter 100 bis 300 U/min, liegt; und
Schritt c) Scheren des Gemischs mit einer Scherrate von wenigstens 25.000 s⁻¹, vorzugsweise wenigstens 50.000 s⁻¹, bevorzugter von 70.000 s⁻¹ bis 180.000 s⁻¹, für wenigstens 10 Minuten, vorzugsweise wenigstens 20 Minuten, bevorzugter 20 bis 120 Minuten, höchst bevorzugt 30 bis 60 Minuten.

8. Verfahren nach Anspruch 7, wobei Schritt a) durch Lösen des Alkylethersulfats oder -sulfonats in dem Wasser und Zugeben des Entschäumers zu der erhaltenen Lösung durchgeführt wird oder Schritt a) durch gleichzeitiges Zugeben des Alkylethersulfats oder -sulfonats und des Entschäumers zu dem Wasser durchgeführt wird.

9. Polycarboxylatetherformulierung, die wenigstens einen Polycarboxylatether und eine Entschäumeremulsion nach einem der Ansprüche 1 bis 6 umfasst.

10. Polycarboxylatetherformulierung nach Anspruch 9, wobei der Polycarboxylatether eine Polycarboxylateinheit und eine Ethereinheit umfasst, wobei die Polycarboxylateinheit vorzugsweise ein kohlenstoffhaltiges Gerüst ist, das eine Carbonsäuregruppe und/oder einen Ester und/oder ein Salz davon und gegebenenfalls eine Sulfonsäuregruppe und/oder ein Salz davon trägt.

11. Polycarboxylatetherformulierung nach Anspruch 10, wobei das Gewichtsverhältnis zwischen der Polycarboxylateinheit und der Ethereinheit von 3:7 bis 99:1, vorzugsweise von 4:6 bis 95:5, bevorzugter von 6:4 bis 8:2, beträgt und/oder wobei der Gehalt an dem Polycarboxylatether in der Polycarboxylatetherformulierung vorzugsweise von 5 bis 40 Gew.-%, bevorzugter 10 bis 30 Gew.-%, beträgt und die Polycarboxylatetherformulierung 0,1 bis 5 Gew.-%, vorzugsweise 0,2 bis 2 Gew.-% und höchst bevorzugt 0,4 bis 1 Gew.-% an der Entschäumeremulsion nach einem der Ansprüche 1 bis 6, bezogen auf das Gesamtgewicht der Formulierung, umfasst.

12. Verfahren zur Herstellung der Polycarboxylatetherformulierung nach einem der Ansprüche 9 bis 11, umfassend Mischen der Entschäumeremulsion nach einem der Ansprüche 1 bis 6 mit dem Polycarboxylatether, wobei bei der Herstellung der Polycarboxylatetherformulierung vorzugsweise eine Teil- oder Gesamtmenge an Zusätzen nach einem der Ansprüche 5 bis 6 zugegeben wird.

13. Verwendung der Polycarboxylatetherformulierung nach einem der Ansprüche 9 bis 11 in einer Zementzusammensetzung, die wenigstens einen Zement umfasst, wobei der Zement vorzugsweise ausgewählt ist aus Portlandzement, Mauerwerkszement, Aluminiumoxidzement, feuerfestem Zement, Magnesiumoxidzement, Calciumsulfoaluminatzement, Bohrlochzement und Gemischen davon.

14. Verwendung nach Anspruch 13, wobei die Zementzusammensetzung 0,05 bis 1 Gew.-%, vorzugsweise 0,1 bis 0,3 Gew.-%, an der Polycarboxylatetherformulierung nach einem der Ansprüche 9 bis 11 umfasst.

## Revendications

1. Emulsion antimousse, qui comprend au moins un sulfate ou sulfonate d'éther d'alkyle, au moins un antimousse et de l'eau, l'alkyle dans le sulfate ou sulfonate d'éther d'alkyle étant C₆-C₂₂ alkyle et le diamètre moyen des gouttelettes de l'émulsion étant de 80 à 300 nm.

2. Emulsion antimousse selon la revendication 1, dans laquelle l'alkyle dans le sulfate ou sulfonate d'éther d'alkyle est C₈-C₁₈ alkyle, de préférence C₁₂-C₁₈ alkyle.

3. Emulsion antimousse selon la revendication 1 ou 2, dans laquelle le sulfate ou sulfonate d'éther d'alkyle est un sulfate ou sulfonate d'alcanols polyéthoxylés, dans laquelle le sulfate ou sulfonate d'alcanols polyéthoxylés a de préférence 4 à 80 motifs oxyéthylène, plus préférablement 8 à 60 motifs oxyéthylène, le plus préférablement 12 à 50 motifs oxyéthylène.

4. Emulsion antimousse selon l'une quelconque des revendications 1 à 3, dans laquelle :
l'antimousse est un antimousse insoluble dans l'eau ; et/ou
l'antimousse est choisi parmi une huile de silicium, une émulsion contenant du silicium, un acide gras, un ester d'acide gras, un polysiloxane modifié organique, un ester de borate, un polyalcoxylate, un copolymère de polyoxyalkylène, des diols acétyléniques ayant des propriétés antimousse et un ester phosphorique ayant la formule P(O)(OR₈)₃₋ₓ(OR₉)ₓ dans laquelle P représente phosphore, O représente oxygène et R₈ et R₉ représentent indépendamment un groupe C₂-C₂₀ alkyle ou C₆-C₁₄ aryle et x est 0, 1 ou 2, et des mélanges correspondants, de préférence parmi une huile de silicium, une émulsion contenant du silicium, un polysiloxane modifié organique, un polyalcoxylate, un copolymère de polyoxyalkylène, des diols acétyléniques ayant des propriétés antimousse et un ester phosphorique ayant la formule P(O)(OR₈)₃₋ₓ(OR₉)ₓ dans laquelle P représente phosphore, O représente oxygène et R₈ et R₉ représentent indépendamment C₂-C₈ alkyle et x est 0, 1 ou 2, et un mélange correspondant, plus préférablement parmi l'antimousse est choisi parmi un alcool propoxylé, un polysiloxane modifié organique et un mélange correspondant.

5. Emulsion antimousse selon l'une quelconque des revendications 1 à 4, dans laquelle l'émulsion comprend en outre au moins un additif choisi parmi la polyvinylpyrrolidone, la diéthanolamine, la triéthanolamine, l'éthylèneglycol, l'urée, un sel de carbonate et un mélange correspondant, dans laquelle, de préférence, ledit additif est utilisé en une quantité de 5 à 15 % en poids lorsque l'additif est la polyvinylpyrrolidone, ou en une quantité de 1 à 8 % en poids lorsque l'additif est choisi parmi la diéthanolamine, la triéthanolamine, l'éthylèneglycol, l'urée, un sel de carbonate et un mélange correspondant, par rapport au poids total de l'émulsion.

6. Emulsion antimousse selon la revendication 5, dans laquelle le poids moléculaire moyen en nombre de la polyvinylpyrrolidone est dans la plage de 5 000 à 20 000, et/ou dans laquelle le diamètre moyen des gouttelettes de l'émulsion est de préférence de 90 à 250 nm, plus préférablement de 90 à 150 nm, et/ou dans laquelle la concentration du sulfate ou sulfonate d'éther d'alkyle dans l'émulsion antimousse est de préférence de 5 à 20 % en poids, plus préférablement de 8 à 15 % en poids, et/ou dans laquelle le rapport pondéral du sulfate ou sulfonate d'éther d'alkyle à l'antimousse est de préférence compris de 0,15:1 à 0,8:1, plus préférablement de 0,2:1 à 0,5:1, le plus préférablement de 0,3:1 à 0,4:1.

7. Procédé de production de l'émulsion antimousse selon l'une quelconque des revendications 1 à 6, qui comprend étape a) préparation d'un mélange comprenant le sulfate ou sulfonate d'éther d'alkyle, l'antimousse et de l'eau ; étape b) soumission éventuellement du mélange à un faible cisaillement, de préférence la vitesse d'agitation dans le faible cisaillement étant dans la plage de 50 à 500 tpm, plus préférablement 100 à 300 tpm ; et
étape c) cisaillement du mélange à une vitesse de cisaillement d'au moins 25 000 s⁻¹, de préférence d'au moins 50 000 s⁻¹, plus préférablement de 70 000 s⁻¹ à 180 000 s⁻¹ pendant au moins 10 minutes, de préférence au moins 20 minutes, plus préférablement 20 à 120 minutes, le plus préférablement 30 à 60 minutes.

8. Procédé selon la revendication 7, dans lequel l'étape a) est effectuée en dissolvant le sulfate ou sulfonate d'éther d'alkyle dans l'eau et en ajoutant l'antimousse à la solution obtenue ou l'étape a) est effectuée en ajoutant simultanément le sulfate ou sulfonate d'éther d'alkyle et l'antimousse à l'eau.

9. Formulation d'éther de polycarboxylate, qui comprend au moins un éther de polycarboxylate et une émulsion antimousse telle que définie dans l'une quelconque des revendications 1 à 6.

10. Formulation d'éther de polycarboxylate selon la revendication 9, dans laquelle l'éther de polycarboxylate comprend un groupement polycarboxylate et un groupement éther, dans laquelle le groupement polycarboxylate est de préférence un squelette contenant du carbone portant un groupe acide carboxylique et/ou un ester et/ou un sel correspondant, et éventuellement un groupe acide sulfonique et/ou un sel correspondant.

11. Formulation d'éther de polycarboxylate selon la revendication 10, dans laquelle le rapport pondéral entre le groupement polycarboxylate et le groupement éther est de 3:7 à 99:1, de préférence de 4:6 à 95:5, plus préférablement de 6:4 à 8:2 et/ou dans laquelle la teneur en éther de polycarboxylate dans la formulation d'éther de polycarboxylate est de préférence de 5 à 40 % en poids, plus préférablement 10 à 30 % en poids, et la formulation d'éther de polycarboxylate comprend 0,1 à 5 % en poids, de préférence 0,2 à 2 % en poids et le plus préférablement 0,4 à 1 % en poids de l'émulsion antimousse telle que définie dans l'une quelconque des revendications 1 à 6, par rapport au poids total de la formulation.

12. Procédé de préparation de la formulation d'éther de polycarboxylate selon l'une quelconque des revendications 9 à 11, qui comprend le mélange de l'émulsion antimousse telle que définie dans l'une quelconque des revendications 1 à 6 avec l'éther de polycarboxylate, dans lequel de préférence une quantité partielle ou totale d'additifs tels que définis dans l'une quelconque des revendications 5 à 6 est ajoutée lors de la production de la formulation d'éther de polycarboxylate.

13. Utilisation de la formulation d'éther polycarboxylate telle que définie dans l'une quelconque des revendications 9 à 11 dans une composition de ciment, qui comprend au moins un ciment, dans laquelle le ciment est de préférence choisi parmi le ciment portland, le ciment de maçonnerie, le ciment d'alumine, le ciment réfractaire, le ciment de magnésie, le ciment de sulfoaluminate de calcium, le ciment de puits de pétrole, et les mélanges correspondants.

14. Utilisation selon la revendication 13, dans laquelle la composition de ciment comprend 0,05 à 1 % en poids, de préférence 0,1 à 0,3 % en poids de la formulation d'éther polycarboxylate telle que définie dans l'une quelconque des revendications 9 à 11.
